# EUROPEAN PATENT SPECIFICATION

(11) **EP 4 075 234 B1**
(45) Date of publication and mention of the grant of the patent: **09.07.2025**
(21) Application number: 21751047.8
(22) Date of filing: 14.01.2021
(51) Int. Cl.: G06F 1/16

(54) **ELECTRONIC APPARATUS INCLUDING SPACED HOUSINGS**
ELEKTRONISCHES GERÄT, DAS BEABSTANDETE GEHÄUSEN EINSCHLIESST
APPAREIL ÉLECTRONIQUE COMPRENANT DES BOÎTIERS ESPACÉS

(30) Priority: 05.02.2020 KR 20200013977
(43) Date of publication of application: 19.10.2022
(73) Proprietor: Samsung Electronics Co., Ltd., Suwon-si, Gyeonggi-do 16677 (KR)
(72) Inventor: MOON, Sungjae, Suwon-si, Gyeonggi-do 16677 (KR); SEONG, Younghun, Suwon-si, Gyeonggi-do 16677 (KR); LEE, Jaehoon, Suwon-si, Gyeonggi-do 16677 (KR); JU, Wanjae, Suwon-si, Gyeonggi-do 16677 (KR)
(74) Representative: Gulde & Partner
(86) International application number: PCT/KR2021/000514
(87) International publication number: WO 2021/157892

(56) References cited:
- JP-A- 2004 274 729
- KR-A- 20030 016 615
- KR-A- 20030 016 615
- KR-A- 20050 004 429
- KR-A- 20170 056 292
- US-A1- 2013 020 747
- US-A1- 2019 140 342

## Description

### [Technical Field]

Various embodiments of the disclosure relate to an electronic apparatus including spaced housings.

### [Background Art]

Electronic apparatuses have become slimmer and improved to increase the rigidity of the electronic apparatuses, to enhance design aspects thereof, and to differentiate functional elements thereof. Electronic apparatuses have evolved from unilateral rectangular shapes to more diversified shapes. Electronic apparatuses may have deformable structures such that large-screen displays can be used while ensuring portability. As an example of the deformable structure, an electronic apparatus may include at least two foldable housings configured to operate so as to fold or unfold with regard to each other. Such an electronic apparatus may include multiple electronic components disposed in the inner space. Electronic apparatuses may be required to have an efficient disposition structure such that electronic components perform unique functions, respectively, without interfering with functions of others.

KR 2003 0016615 A discloses a foldable electronic apparatus with a spacing member arranged in a microphone opening. US 2019/140342 A1 discloses a foldable electronic device having a flexible display and conductive portions on its housing parts acting as antennas.

### [Title of Invention]

### [Technical Problem]

A foldable electronic apparatus may include a hinge module and first and second housings connected through the hinge module so as to face each other. Such a foldable electronic apparatus may operate in an in-folding and/or out-folding type as the first housing rotates with regard to the second housing in a range of 0-360° through the hinge module. The foldable electronic apparatus may include a flexible display disposed across the first and second housings when unfolded by 180°.

An electronic apparatus (for example, foldable electronic apparatus) may have a first housing at least partially including a first conductive part, and may have a second housing at least partially including a second conductive part. The first conductive part and/or second conductive part may be used as an antenna operating in at least one frequency band through a wireless communication circuit disposed in the inner space of the electronic apparatus.

However, the electronic apparatus may be configured such that first and second conductive parts substantially face each other in a folding state, and this may degrade the antenna radiation performance. The electronic apparatus includes protective covers positioned between the first and second housings and disposed on respective housings to protect edges of the flexible display, but the distance of spacing between the two housings, which are spaced apart as the protective covers substantially face each other, may make it difficult to improve the antenna radiation performance.

Various embodiments may provide an electronic apparatus (for example, foldable electronic apparatus) including multiple housings disposed to be spaced apart from each other in a folding state, for example. In addition, various embodiments may provide a spacing member configured to form a distance of spacing between multiple housing in a folding state of the electronic apparatus, for example.

### [Solution to Problem]

The present invention is defined by the appended set of claims. According to an embodiment, an electronic apparatus is provided as defined by appended claims.

### [Advantageous Effects of Invention]

An electronic apparatus according to exemplary embodiments of the disclosure may form a distance of spacing between two housings through a spacing member. For example, the electronic apparatus may have a spacing member which is used as a sound guide structure of a sound module, and which at least partially spaces the two housings from each other, thereby securing a distance of spacing between antennas disposed on the two housings, and helping improve the radiation performance. In addition, a sound guide structure may be provided by structurally changing the spacing member such that sound is discharged outwards even in a folding state, thereby improving utility of the electronic apparatus.

### [Brief Description of Drawings]

FIG. 1A is a front perspective view of an electronic apparatus, which shows a flat stage or an unfolding state according to various embodiments of the disclosure.
FIG. 1B is a plan view illustrating the front surface of an electronic apparatus in an unfolding state according to various embodiments of the disclosure.
FIG. 1C is a plan view illustrating the rear surface an electronic apparatus in an unfolding state of according to various embodiments of the disclosure.
FIG. 2A is a perspective view of an electronic apparatus, which shows a folding state according to various embodiments of the disclosure.
FIG. 2B is a perspective view of an electronic apparatus, which shows an intermediate state according to various embodiments of the disclosure.
FIG. 3 is an exploded perspective view of an electronic apparatus according to various embodiments of the disclosure.
FIG. 4 is a view of an electronic apparatus, which shows a state in which two housings are spaced by means of a spacing member, in a folding state according to various embodiments of the disclosure.
FIG. 5A and FIG. 5B are partial perspective views of an electronic apparatus, which show an arrangement relationship before and after a spacing member according to various embodiments of the disclosure is assembled.
FIG. 6 is a partial cross-sectional view of an electronic apparatus seen from the line 6-6 of FIG. 4 according to various embodiments of the disclosure.
FIG. 7A is a view of an electronic apparatus, which shows a state in which two housings are spaced by means of a spacing member and a damper, in a folding state according to various embodiments of the disclosure.
FIG. 7B is a partial cross-sectional view of an electronic apparatus seen from the line 7b-7b of FIG. 7A according to various embodiments of the disclosure.
FIG. 8 is a perspective view of a spacing member according to various embodiments of the disclosure.
FIG. 9 is a view of an electronic apparatus, which shows a state in which two housings are spaced by means of a spacing member including a sound induction slit of FIG. 8, in a folding state according to various embodiments of the disclosure.
FIG. 10 is a partial perspective view of a second protective cover including a sound induction slit according to various embodiments of the disclosure.
FIG. 11 is a view of an electronic apparatus, which shows a state in which two housings are spaced by means of a spacing member and a second protective cover including a sound induction slit, in a folding state according to various embodiments of the disclosure.

### [Mode for the Invention]

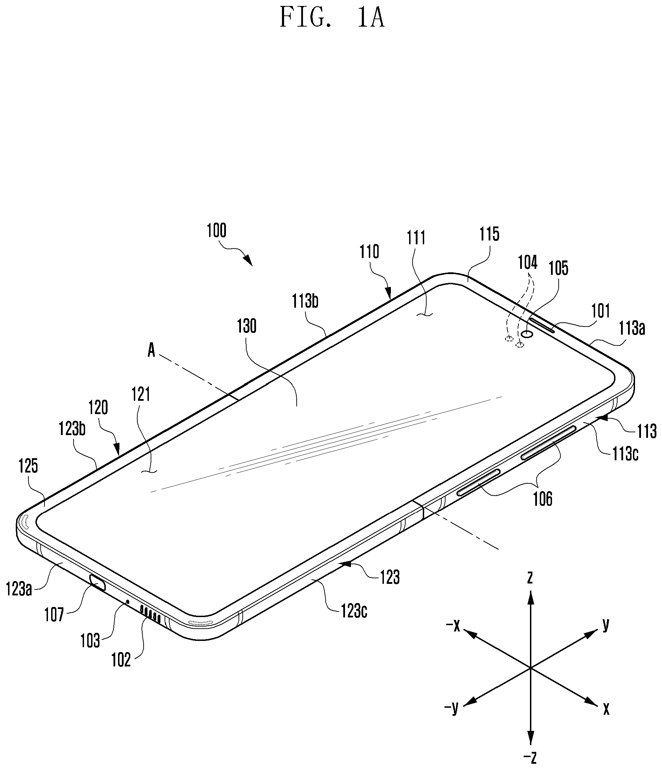

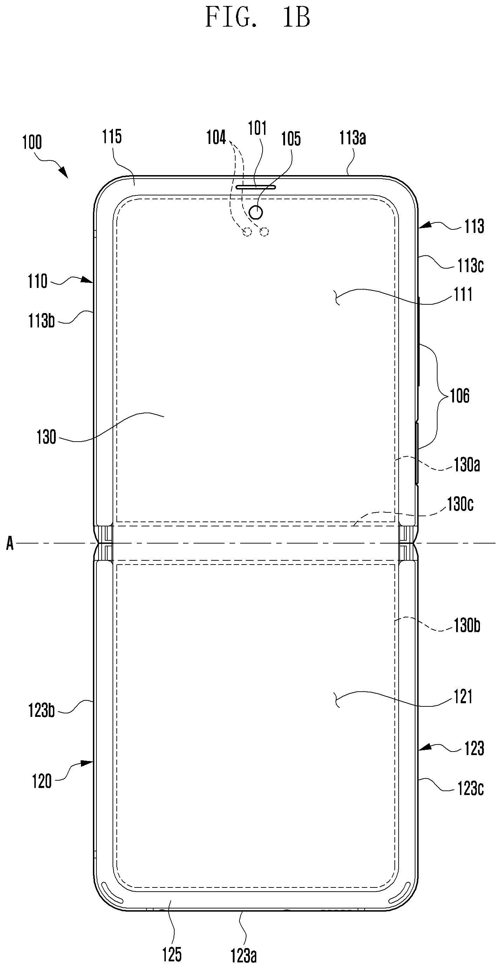

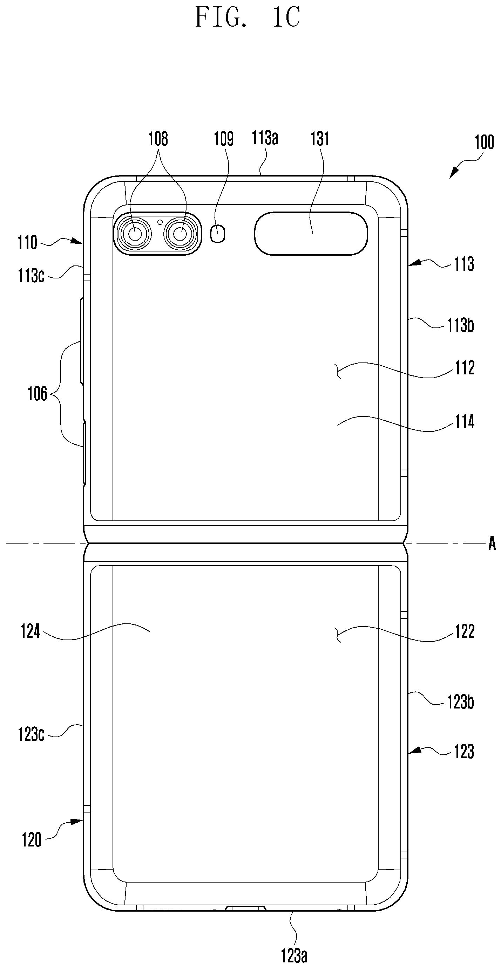

FIG. 1A is a front perspective view of an electronic device in a flat or unfolded state according to certain embodiments of the disclosure. FIG. 1B is a plan view illustrating the front of the electronic device in an unfolded state according to certain embodiments of the disclosure. FIG. 1C is a plan view illustrating the back of the electronic device in an unfolded state according to certain embodiments of the disclosure.

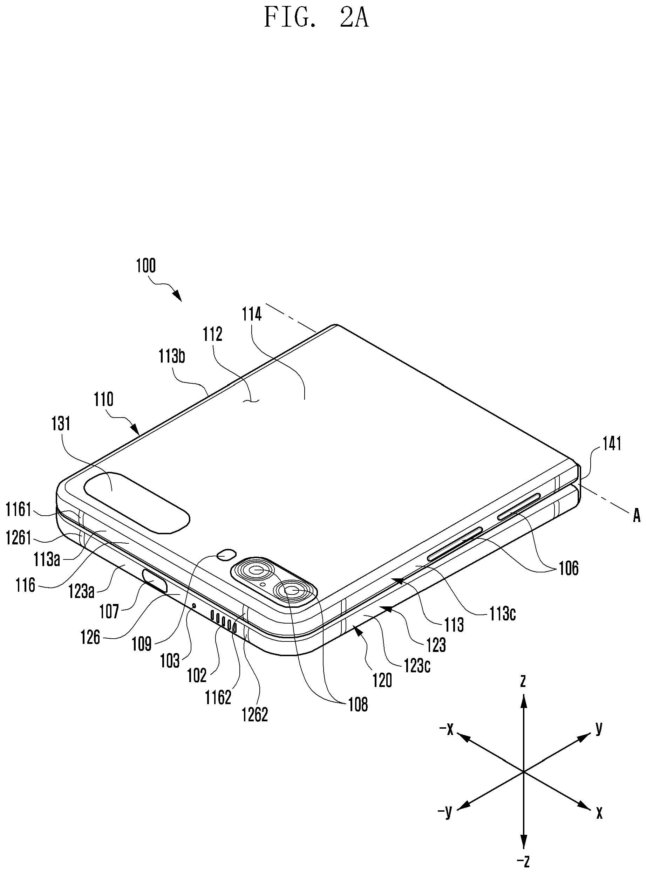

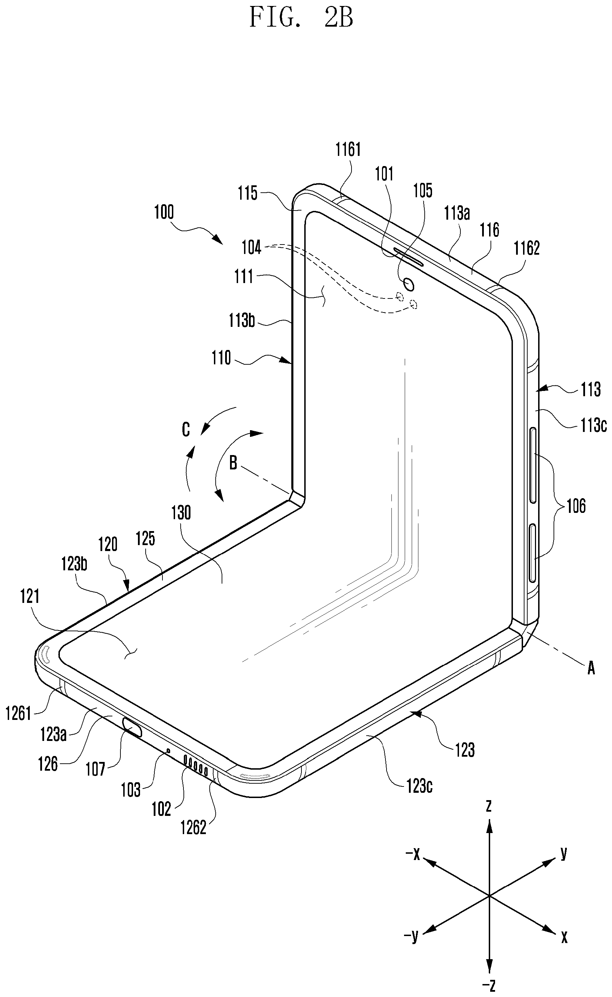

FIG. 2A is a perspective view of the electronic device in a folded state according to certain embodiments of the disclosure. FIG. 2B is a perspective view of the electronic device in an intermediate state according to certain embodiments of the disclosure.

With reference to FIGS. 1A to 2B, the electronic device 100 may include a pair of housings 110 and 120 (e.g., foldable housings) that are rotatably coupled as to allow folding relative to a hinge mechanism (e.g., hinge mechanism 140 in FIG. 1B) . In certain embodiments, the hinge mechanism (e.g., hinge mechanism 140 in FIG. 1B) may be disposed in the X-axis direction or in the Y-axis direction. In certain embodiments, two or more hinge mechanisms (e.g., hinge mechanism 140 in FIG. 1B) may be arranged to be folded in a same direction or in different directions. According to an embodiment, the electronic device 100 may include a flexible display 400 (e.g., foldable display) disposed in an area formed by the pair of housings 110 and 120. According to an embodiment, the first housing 110 and the second housing 120 may be disposed on both sides about the folding axis (axis A), and may have a substantially symmetrical shape with respect to the folding axis (axis A). According to an embodiment, the angle or distance between the first housing 110 and the second housing 120 may vary, depending on whether the state of the electronic device 100 is a flat or unfolded state, a folded state, or an intermediate state.

According to certain embodiments, the pair of housings 110 and 120 may include a first housing 110 (e.g., first housing structure) coupled to the hinge mechanism (e.g., hinge mechanism 140 in FIG. 1B), and a second housing 120 (e.g., second housing structure) coupled to the hinge mechanism (e.g., hinge mechanism 140 in FIG. 1B). According to an embodiment, in the unfolded state, the first housing 110 may include a first surface 111 facing a first direction (e.g., front direction) (z-axis direction), and a second surface 112 facing a second direction (e.g., rear direction) (negative z-axis direction) opposite to the first surface 111. According to an embodiment, in the unfolded state, the second housing 120 may include a third surface 121 facing the first direction (z-axis direction), and a fourth surface 122 facing the second direction (negative z-axis direction). According to an embodiment, the electronic device 100 may be operated in such a manner that the first surface 111 of the first housing 110 and the third surface 121 of the second housing 120 face substantially the same first direction (z-axis direction) in the unfolded state, and the first surface 111 and the third surface 121 face one another in the folded state. According to an embodiment, the electronic device 100 may be operated in such a manner that the second surface 112 of the first housing 110 and the fourth surface 122 of the second housing 120 face substantially the same second direction (negative z-axis direction) in the unfolded state, and the second surface 112 and the fourth surface 122 face one another in opposite directions in the folded state. For example, in the folded state, the second surface 112 may face the first direction (z-axis direction), and the fourth surface 122 may face the second direction (negative z-axis direction).

According to certain embodiments, the first housing 110 may include a first side member 113 that at least partially forms an external appearance of the electronic device 100, and a first rear cover 114 coupled to the first side member 113 that forms at least a portion of the second surface 112 of the electronic device 100. According to an embodiment, the first side member 113 may include a first side surface 113a, a second side surface 113b extending from one end of the first side surface 113a, and a third side surface 113c extending from the other end of the first side surface 113a. According to an embodiment, the first side member 113 may be formed in a rectangular shape (e.g., square or rectangle) through the first side surface 113a, second side surface 113b, and third side surface 113c.

According to certain embodiments, the second housing 120 may include a second side member 123 that at least partially forms the external appearance of the electronic device 100, and a second rear cover 124 coupled to the second side member 123, forming at least a portion of the fourth surface 122 of the electronic device 100. According to an embodiment, the second side member 123 may include a fourth side surface 123a, a fifth side surface 123b extending from one end of the fourth side surface 123a, and a sixth side surface 123c extending from the other end of the fourth side surface 123a. According to an embodiment, the second side member 123 may be formed in a rectangular shape through the fourth side surface 123a, fifth side surface 123b, and sixth side surface 123c.

According to certain embodiments, the pair of housings 110 and 120 are not limited to the shape and combinations illustrated herein, and may be implemented with a combination of other shapes or parts. For example, in certain embodiments, the first side member 113 may be integrally formed with the first rear cover 114, and the second side member 123 may be integrally formed with the second rear cover 124.

According to certain embodiments, in the unfolded state of the electronic device 100, the second side surface 113b of the first side member 113 and the fifth side surface 123b of the second side member 123 may be connected without a gap formed therebetween. According to an embodiment, in the unfolded state of the electronic device 100, the third side surface 113c of the first side member 113 and the sixth side surface 123c of the second side member 123 may be connected without a gap formed therebetween. According to an embodiment, in the unfolded state, the electronic device 100 may be configured such that the combined length of the second side surface 113b and the fifth side surface 123b is longer than the combined length of the first side surface 113a and/or the fourth side surface 123a. In addition, the combined length of the third side surface 113c and the sixth side surface 123c may be configured to be longer than the length of the first side surface 113a and/or the fourth side surface 123a.

According to certain embodiments, the first side member 113 and/or the second side member 123 may be formed of a metal, and may further include a polymer injected into the metal. According to an embodiment, the first side member 113 and/or the second side member 123 may include at least one conductive portion 116 and/or 126 electrically segmented through one or more segmenting portions 1161 and 1162 and/or segmenting 1261 and 1262, which may be formed using a polymer. In this case, the at least one conductive portion may be electrically connected to a wireless communication circuit included in the electronic device 100, and may be used as an antenna operating in at least one designated band (e.g., legacy band).

According to certain embodiments, the first rear cover 114 and/or the second rear cover 124 may be formed of, for example, coated or tinted glass, ceramic, polymer, metal (e.g., aluminum, stainless steel or "STS", or magnesium), or a combination thereof.

According to certain embodiments, the flexible display 400 may be disposed to extend from the first surface 111 of the first housing 110 across the hinge mechanism (e.g., hinge mechanism 140 in FIG. 1B) to at least a portion of the third surface 121 of the second housing 120. For example, the flexible display 400 may include a first region 130a substantially corresponding to the first surface 111, a second region 130b corresponding to the second surface 121, and a third region 130c (e.g., the bendable region) connecting the first region 130a and the second region 130b and corresponding to the hinge mechanism (e.g., hinge mechanism 140 in FIG. 1B). According to an embodiment, the electronic device 100 may include a first protection cover 115 (e.g., first protection frame or first decoration member) coupled along the periphery of the first housing 110. According to an embodiment, the electronic device 100 may include a second protection cover 125 (e.g., second protection frame or second decoration member) coupled along the periphery of the second housing 120. According to an embodiment, the first protection cover 115 and/or the second protection cover 125 may be formed of a metal or polymer material. According to an embodiment, the first protection cover 115 and/or the second protection cover 125 may be used as a decorative member. According to an embodiment, the flexible display 400 may be positioned such that the periphery of the first region 130a is interposed between the first housing 110 and the first protection cover 115. According to an embodiment, the flexible display 400 may be positioned such that the periphery of the second region 130b is interposed between the second housing 120 and the second protection cover 125. According to an embodiment, the flexible display 400 may be positioned such that the periphery of the flexible display 400 corresponding to a protection cap 135 is protected through the protection cap disposed in a region corresponding to the hinge mechanism (e.g., hinge mechanism 140 in FIG. 1B). Consequently, the periphery of the flexible display 400 may be substantially protected from the outside. According to an embodiment, the electronic device 100 may include a hinge housing 141 (e.g., hinge cover) that is disposed so as to support the hinge mechanism (e.g., hinge mechanism 140 in FIG. 1B). The hinge housing 141 may further be exposed to the outside when the electronic device 100 is in the folded state, and be invisible as viewed from the outside when retracted into a first space (e.g., internal space of the first housing 110) and a second space (e.g., internal space of the second housing 120) when the electronic device 100 is in the unfolded state. In certain embodiments, the flexible display 400 may be disposed to extend from at least a portion of the second surface 112 to at least a portion of the fourth surface 122. In this case, the electronic device 100 may be folded so that the flexible display 400 is exposed to the outside (out-folding scheme).

According to certain embodiments, the electronic device 100 may include a sub-display 131 disposed separately from the flexible display 400. According to an embodiment, the sub-display 131 may be disposed to be at least partially exposed on the second surface 112 of the first housing 110, and may display status information of the electronic device 100 in place of the display function of the flexible display 400 in case of the folded state. According to an embodiment, the sub-display 131 may be disposed to be visible from the outside through at least some region of the first rear cover 114. In certain embodiments, the sub-display 131 may be disposed on the fourth surface 122 of the second housing 120. In this case, the sub-display 131 may be disposed to be visible from the outside through at least some region of the second rear cover 124.

According to certain embodiments, the electronic device 100 may include at least one of an input device 103 (e.g., microphone), sound output devices 101 and 102, a sensor module 104, camera devices 105 and 108, a key input device 106, or a connector port 107. In the illustrated embodiment, the input device 103 (e.g., microphone), sound output devices 101 and 102, sensor module 104, camera devices 105 and 108, key input device 106, and connector port 107 indicate a hole or shape formed in the first housing 110 or the second housing 120, but may be defined to include a substantial electronic component (e.g., input device, sound output device, sensor module, or camera device) that is disposed inside the electronic device 100 and operated through a hole or a shape.

According to certain embodiments, the input device 103 may include at least one microphone disposed on the second housing 120. In certain embodiments, the input device 103 may include a plurality of microphones disposed to detect the direction of a sound. In certain embodiments, a plurality of microphones may be disposed at appropriate positions in the first housing 110 and/or the second housing 120. According to an embodiment, the sound output devices 101 and 102 may include speakers. According to an embodiment, the input device 103 may include a receiver for calls disposed in the first housing 110, and a speaker disposed in the second housing 120. In certain embodiments, the input device 103, the sound output devices 101 and 102, and the connector port 107 may be disposed in a space arranged in the first housing 110 and/or the second housing 120 of the electronic device 100, and may be exposed to the external environment through at least one hole formed in the first housing 110 and/or the second housing 120. According to an embodiment, at least one connector port 107 may be used to transmit and receive power and/or data to and from an external electronic device. In certain embodiments, at least one connector port (e.g., ear jack hole) may accommodate a connector (e.g., ear jack) for transmitting and receiving an audio signal to and from an external electronic device. In certain embodiments, the hole formed in the first housing 110 and/or the second housing 120 may be commonly used for the input device 103 and the sound output devices 101 and 102. In certain embodiments, the sound output devices 101 and 102 may include a speaker (e.g., piezo speaker) that operates without using a hole formed in the first housing 110 and/or the second housing 120.

According to certain embodiments, the sensor module 104 may generate an electrical signal or data value corresponding to an internal operating state of the electronic device 100 or an external environmental state. The sensor module 104 may detect an external environment, for example, through the first surface 111 of the first housing 110. In certain embodiments, the electronic device 100 may further include at least one sensor module disposed to detect an external environment through the second surface 112 of the first housing 110. According to an embodiment, the sensor module 104 (e.g., illuminance sensor) may be disposed under the flexible display 400 to detect an external environment through the flexible display 400. According to an embodiment, the sensor module 104 may include at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, an illuminance sensor, a proximity sensor, a biometric sensor, an ultrasonic sensor, or an illuminance sensor 104.

According to certain embodiments, the camera devices 105 and 108 may include a first camera device 105 (e.g., front camera device) disposed on the first surface 111 of the first housing 110, and a second camera device 108 disposed on the second surface 112 of the first housing 110. The electronic device 100 may further include a flash 109 disposed close to the second camera device 108. According to an embodiment, the camera device 105 or 108 may include one or more lenses, an image sensor, and/or an image signal processor. The flash 109 may include, for example, a light emitting diode or a xenon lamp. According to an embodiment, the camera devices 105 and 108 may be arranged so that two or more lenses (e.g., wide-angle lens, super-wide-angle lens, or telephoto lens) and image sensors are positioned on one surface (e.g., first surface 111, second surface 112, third surface 121, or fourth surface 122) of the electronic device 100. In certain embodiments, the camera devices 105 and 108 may include time-of-flight (TOF) lenses and/or an image sensor.

According to certain embodiments, the key input device 106 (e.g., key button) may be disposed on the third side surface 113c of the first side member 113 of the first housing 110. In certain embodiments, the key input device 106 may be disposed on at least one of the other side surfaces 113a and 113b of the first housing 110 and/or the side surfaces 123a, 123b and 123c of the second housing 120. In certain embodiments, the electronic device 100 may not include some or all of the key input devices 106, and those not included key input devices 106 may be implemented in other forms, such as soft keys, on the flexible display 400. In certain embodiments, the key input device 106 may be implemented by using a pressure sensor included in the flexible display 400.

According to certain embodiments, some of the camera devices 105 and 108 (e.g., first camera device 105) or the sensor module 104 may be disposed to be exposed through the flexible display 400. For example, the first camera device 105 or the sensor module 104 may be arranged in the internal space of the electronic device 100 so as to be in contact with the external environment through an opening (e.g., through hole) formed at least partially in the flexible display 400. In another embodiment, some sensor modules 104 may be arranged in the internal space of the electronic device 100 so as to perform their functions without being visually exposed through the flexible display 400. For example, in this case, the opening of a region of the flexible display 400 facing the sensor module may be not needed.

With reference to FIG. 2B, the electronic device 100 may be operated to remain in an intermediate state through the hinge mechanism (e.g., hinge device 140 in FIG. 1B). In this case, the electronic device 100 may control the flexible display 400 to display different pieces of content on the display area corresponding to the first surface 111 and the display area corresponding to the third surface 121. According to an embodiment, the electronic device 100 may be operated substantially in an unfolded state (e.g., unfolded state of FIG. 1A) and/or substantially in a folded state (e.g., folded state of FIG. 2A) with respect to a specific inflection angle (e.g., angle between the first housing 110 and the second housing 120 in the intermediate state) through the hinge mechanism (e.g., hinge mechanism 140 in FIG. 1B). For example, when a pressing force is applied in the unfolding direction (B direction) in a state where the electronic device 100 is unfolded at a specific inflection angle, through the hinge mechanism (e.g., hinge mechanism 140 in FIG. 1B), the electronic device 100 may be transitioned to an unfolded state (e.g., unfolded state of FIG. 1A). For example, when a pressing force is applied in the folding direction (C direction) in a state where the electronic device 100 is unfolded at a specific inflection angle, through the hinge mechanism (e.g., hinge mechanism 140 in FIG. 1B), the electronic device 100 may be transitioned to a closed state (e.g., folded state of FIG. 2A). In an embodiment, the electronic device 100 may be operated to remain in an unfolded state at various angles (not shown) through the hinge mechanism (e.g., hinge mechanism 140 in FIG. 1B).

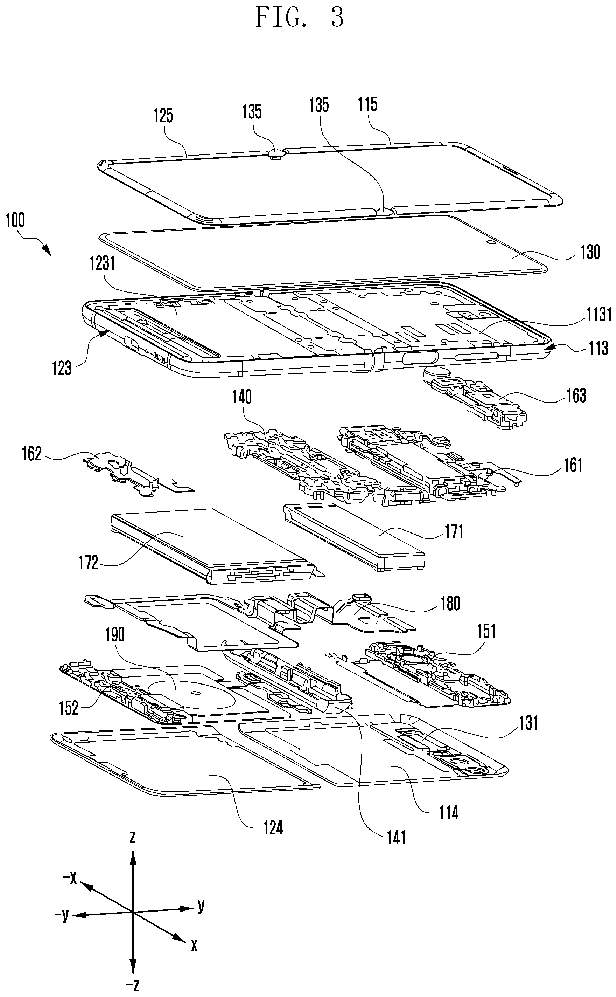

FIG. 3 is an exploded perspective view of the electronic device according to certain embodiments of the disclosure.

With reference to FIG. 3, the electronic device 100 may include a first side member 113 (e.g., first side frame), a second side member 123 (e.g., second side frame), and a hinge mechanism 140 (e.g., hinge module) rotatably connecting the first side member 113 and the second side member 123. According to an embodiment, the electronic device 100 may include a first support member 1131 (e.g., first support member) at least partially extending from the first side member 113, and a second support member 1231 at least partially extending from the second side member 123. According to an embodiment, the first support member 1131 may be integrally formed with the first side member 113 or may be structurally coupled to the first side member 113. Similarly, the second support member 1231 may be integrally formed with the second side member 123 or may be structurally coupled to the second side member 123. According to an embodiment, the electronic device 100 may include a flexible display 400 disposed to be supported by the first support member 1131 and the second support member 1231. According to an embodiment, the electronic device 100 may include a first rear cover 114 that is coupled to the first side member 113 and provides a first space between itself and the first support member 1131, and a second rear cover 124 that is coupled to the second side member 123 and provides a second space between itself and the second support member 1231. In certain embodiments, the first side member 113 and the first rear cover 114 may be integrally formed. In certain embodiments, the second side member 123 and the second rear cover 124 may be integrally formed. According to an embodiment, the electronic device 100 may include a first housing 110 (e.g., first housing 110 in FIG. 1A) (e.g., first housing structure) provided through the first side member 113, the first support member 1131, and the first rear cover 114. According to an embodiment, the electronic device 100 may include a second housing (e.g., second housing 120 in FIG. 1A) (e.g., second housing structure) provided through the second side member 123, the second support member 1231, and the second rear cover 124. According to an embodiment, the electronic device 100 may include a sub-display 131 that is disposed to be visible from the outside through at least some region of the first rear cover 114.

According to certain embodiments, the electronic device 100 may include a first substrate assembly 161 (e.g., main printed circuit board), a camera assembly 163, a first battery 171, or a first bracket 151, arranged in the first space between the first side member 113 and the first rear cover 114. According to an embodiment, the camera assembly 163 may include a plurality of camera devices (e.g., camera devices 105 and 108 in FIGS. 1A and 2A), and may be electrically connected to the first substrate assembly 161. According to an embodiment, the first bracket 151 may provide a support structure for supporting the first substrate assembly 161 and/or the camera assembly 163, and improved rigidity. According to an embodiment, the electronic device 100 may include a second board assembly 162 (e.g., sub printed circuit board), an antenna 190 (e.g., coil member), a second battery 172, or a second bracket 152, arranged in the second space between the second side member 123 and the second rear cover 124. According to an embodiment, the electronic device 100 may include a wiring member 180 (e.g., FPCB) extending from the first substrate assembly 161 across the hinge mechanism 140 to a plurality of electronic components arranged between the second side member 123 and the second rear cover 124, to provide electrical connections therebetween. According to an embodiment, the antenna 190 may include a near field communication (NFC) antenna, a wireless charging antenna, and/or a magnetic secure transmission (MST) antenna. The antenna 190 may, for example, perform short-range communication with an external device or wirelessly transmit and receive power utilized for charging.

According to certain embodiments, the electronic device 100 may include a hinge housing 141 (e.g., hinge cover) that supports the hinge mechanism 140 and is disposed so as to be exposed to the outside when the electronic device 100 is in the folded state (e.g., folded state of FIG. 2A) and be invisible from the outside by being retracted into the first space and/or the second space when the electronic device 100 is in the unfolded state (e.g., unfolded state of FIG. 1A).

According to certain embodiments, the electronic device 100 may include a first protection cover 115 coupled along the periphery of the first side member 113. According to an embodiment, the electronic device 100 may include a second protection cover 125 coupled along the periphery of the second side member 123. According to an embodiment, in the flexible display 400, the periphery of a first flat portion (e.g., first flat portion 130a in FIG. 1B) may be protected by the first protection cover 115. According to an embodiment, in the flexible display 400, the periphery of a second flat portion (e.g., second flat portion 130b in FIG. 1B) may be protected by the second protection cover 125. According to an embodiment, the electronic device 100 may include a protection cap 135 that protects the periphery of the third region (e.g., third region 130c in FIG. 1B) of the flexible display 400 corresponding to the hinge mechanism 140.

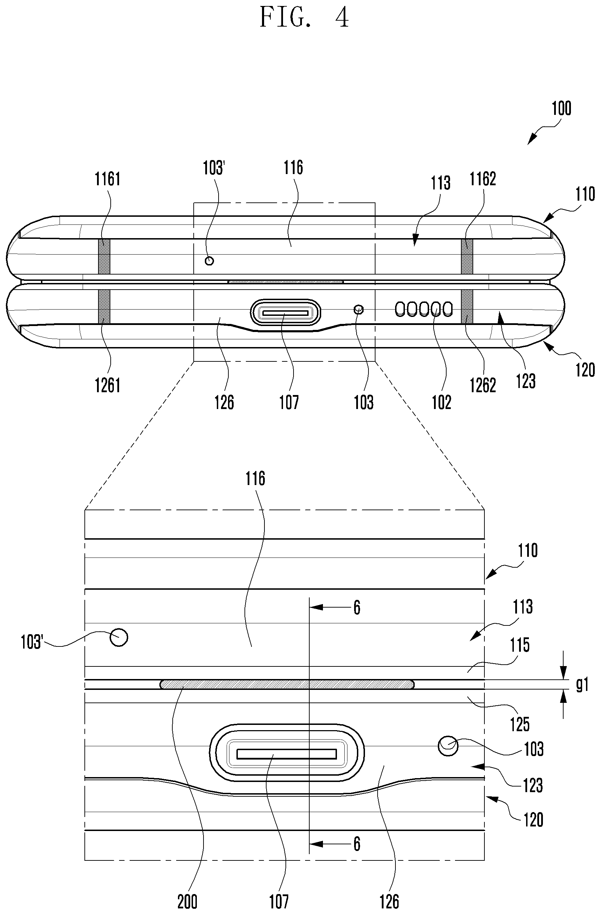

FIG. 4 is a view of an electronic apparatus 100, which shows a state in which two housings 110 and 120 are spaced by means of a spacing member 200, in a folding state according to various embodiments of the disclosure. At least one of elements of an electronic apparatus 100 according to various embodiments may be the same as or similar to at least one of the elements of the electronic apparatus 100 of FIG. 1A to FIG. 3, and thus overlapping descriptions thereof will be omitted.

Referring to FIG. 4, the electronic apparatus 100 includes a first housing 110 and a second housing 120 which are coupled to be rotatable with a hinge module (e.g., the hinge module 140 of FIG. 3). According to one embodiment, the electronic apparatus 100 may include at least one input device 103 and 103' disposed on the first housing 110 and/or the second housing 120 and connected to the outside. According to one embodiment, the electronic apparatus 100 may include a sound output device 102 (e.g., a speaker) and a connector port 107 which are connected to the outside in a folding state.

According to various embodiments, the electronic apparatus 100 may be configured such that at least a part of the first housing 110 and at least a part of the second housing 120 substantially face each other in a folding state. For example, the electronic apparatus 100 may be configured such that at least a part (e.g., the first side surface 113a of FIG. 1A) of a first side frame 113 of the first housing 110 substantially faces at least a part (e.g., the fourth side surface 123a of FIG. 1A) of a second side frame 123 of the second housing 120 in a folding state. According to one embodiment, the first side frame 113 may include a first conductive portion 116 disposed to be electrically segmented through at least one non-conductive portion 1161 and 1162. For example, in at least a part of the first side frame 113, the first conductive portion 116 may be disposed to be electrically segmented through the first non-conductive portion 1161 and the second non-conductive portion 1162 which are arranged to be spaced apart from each other. According to one embodiment, the second side frame 123 may include a second conductive portion 126 disposed to be electrically segmented through at least one non-conductive portion 1261 and 1262. For example, in at least a part of the second side frame 123, the second conductive portion 126 may be disposed to be electrically segmented through a third non-conductive portion 1261 and a fourth non-conductive portion 1262 which are arranged to be spaced apart from each other. According to one embodiment, at least a part of the first conductive portion 116 and/or the second conductive portion 126 may be utilized as an antenna. According to one embodiment, the electronic apparatus 100 may include a wireless communication circuit (not shown) disposed in an inner space thereof. According to one embodiment, the wireless communication circuit (not shown) may be configured to transmit and/or receive a wireless signal in a designated frequency band (e.g., a legacy band or a frequency band in the range of 300 MHz - 6000 MHz) through the first conductive portion 116 and/or the second conductive portion 126.

According to various embodiments, the first conductive portion 116 and the second conductive portion 126 are arranged to substantially face each other when the electronic apparatus 100 is in a folding state. In this case, the first non-conductive portion 1161 and the third non-conductive portion 1261 are arranged to substantially face each other when the electronic apparatus 100 is in a folding state. Likewise, the second non-conductive portion 1162 and the fourth non-conductive portion 1262 are arranged to substantially face each other when the electronic apparatus 100 is in a folding state.

According to various embodiments, the electronic apparatus 100 may include a first protective cover 115 disposed along the edge of the first housing 110, and may include a second protective cover 125 disposed along the edge of the second housing 120. For example, the electronic apparatus 100 may be configured to protect a flexible display (e.g., the flexible display 130 of FIG. 1A) by using the first protective cover 115 and/or the second protective cover 125. According to various embodiments, the electronic apparatus 100 includes a spacing member 200 disposed such that the first protective cover 115 and the second protective cover 125 are spaced apart by a designated distance of spacing (e.g., the first distance of spacing g1) in a folding state.

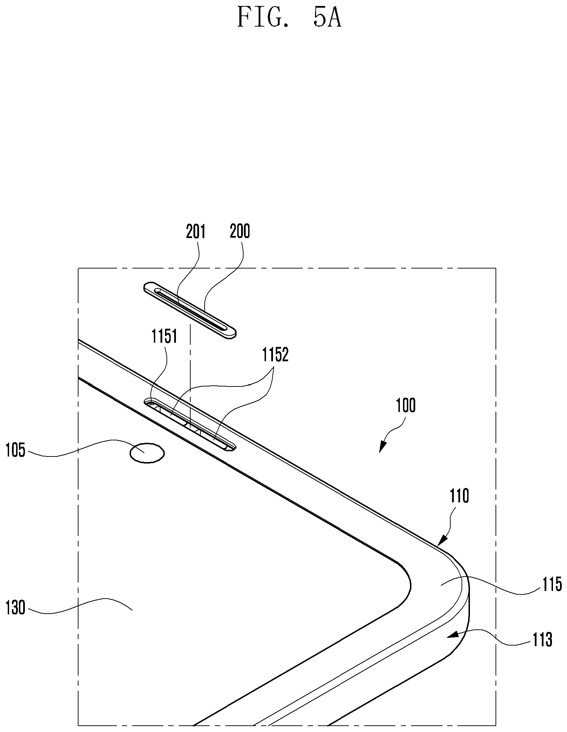

According to various embodiments, the electronic apparatus 100 includes the spacing member 200 configured to prevent the performance degradation of the antenna, which is caused by that the two conductive portions 116 and 126 are substantially face in a folding state. For example, the electronic apparatus 100 is be formed such that the two housings 110 and 120 are spaced apart by a designated first distance of spacing g1 through the spacing member 200 in a folding state. For example, the first distance of spacing g1 may be more advantageous as being greater in order for antenna radiation performance. According to one embodiment, the first distance of spacing g1 may be a range of about 0.1 mm - 5 mm. According to one embodiment, the spacing member 200 may be formed of an elastic material, and thus may be configured to perform a buffering action during a folding operation (e.g., a change to a folding state) of the two housings 110 and 120. According to one embodiment, the spacing member 200 is disposed around a speaker (e.g., the speaker 101 of FIG. 1A) disposed in the first housing 110, and includes an opening (e.g., the opening 201 of FIG. 5A) for delivering sound generated from the speaker. According to one embodiment, the spacing member 200 may be formed of an elastic material such as rubber, urethane or silicone. In some embodiments, the spacing member 200 may be formed of a polymer such as polycarbonate (PC) or a metal material.

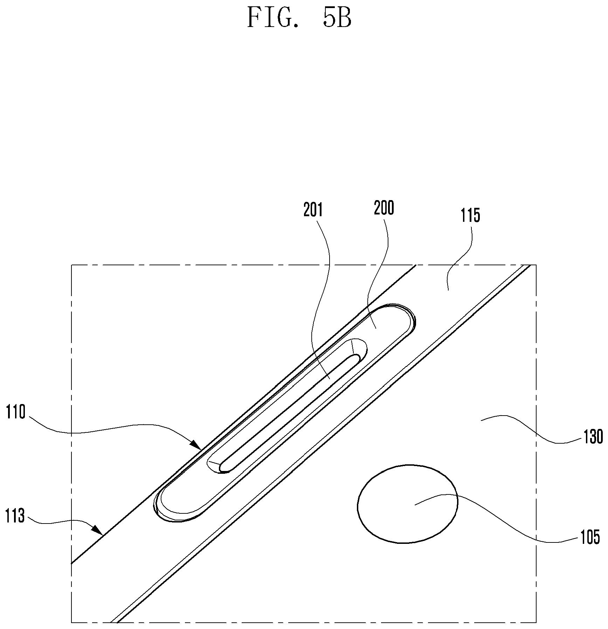

FIG. 5A and FIG. 5B are partial perspective views of an electronic apparatus 100, which show an arrangement relationship before and after a spacing member 200 according to various embodiments of the disclosure is assembled. At least one of elements of an electronic apparatus 100 according to various embodiments may be the same as or similar to at least one of the elements of the electronic apparatus 100 of FIG. 1A to FIG. 4, and thus overlapping descriptions thereof will be omitted.

Referring to FIG. 5A and FIG. 5B, the electronic apparatus 100 may include a first protective cover 115 disposed along the edge of a first housing 110 while surrounding the edge of a flexible display 130 interposed therein. Accordingly, the edge of the flexible display 130 may be disposed so as not to be exposed to the outside between the first housing 110 and the first protective cover 115. According to one embodiment, the first protective cover 115 may include a recess 1151 configured to allow a spacing member 200 to be disposed therein. According to one embodiment, the recess 1151 may be formed lower than the outer surface of the first protective cover 115. According to one embodiment, the first protective cover 115 may include at least one sound connection path 1152 connected to a speaker (e.g., the speaker 101 of FIG. 1A) disposed in an inner space of the first housing 110. According to one embodiment, the sound connection path 1152 may be formed in at least a part of the recess 1151. According to one embodiment, when the spacing member 200 is disposed in the recess 1151, an opening 201 of the spacing member 200 is functionally connected to the sound connection path 1152 of the first protective cover 1151 so as to deliver the sound output through a speaker to the outside of the electronic apparatus 100.

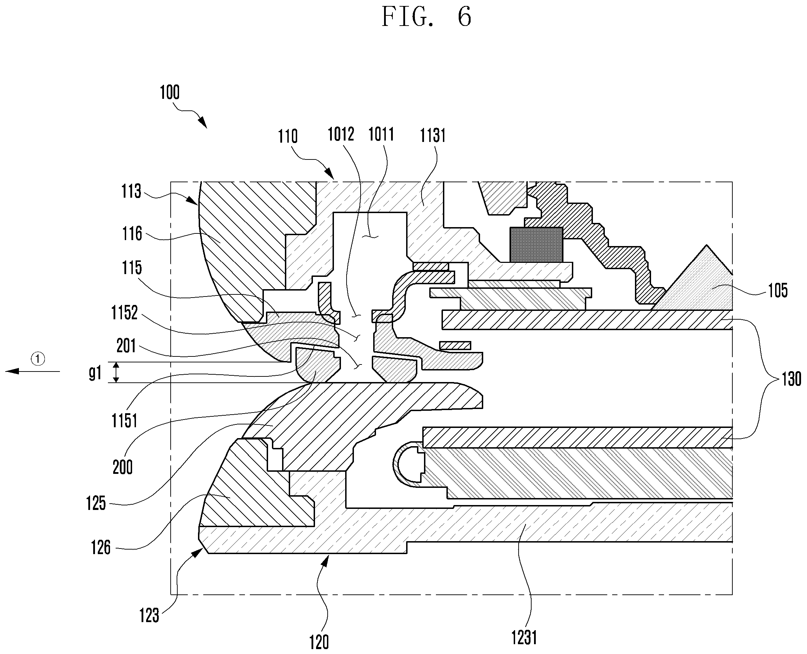

According to various embodiments, the spacing member 200 is disposed in the recess 1151 of the first protective cover 115 so as to protrude further than the outer surface of the first protective cover 115. According to one embodiment, when the electronic apparatus 100 is in a folding state, the amount of protrusion of the spacing member 200 is determined as a designated distance of spacing (e.g., the first distance of spacing g1 of FIG. 4) which allows the first housing 110 and the second housing 120 to be spaced apart from each other. In some embodiments, the spacing member 200 may be disposed on the outer surface of the first protective cover 115 without the recess 1151. In some embodiments, without the first protective cover 115, the spacing member 200 may be disposed on the first housing 110 so as to functionally connect the opening 201 and a sound discharge hole (e.g., the sound discharge hole 1012 of FIG. 6) configured to emit the sound of a speaker (e.g., the speaker 101 of FIG. 1A) formed in the first housing 110.

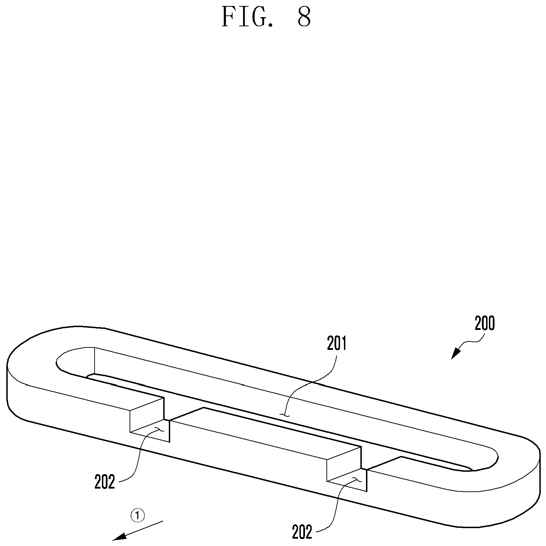

According to various embodiments, when the electronic apparatus 100 is in a folding state, the spacing member 200 is used as a spacing means for spacing the two housings 110 and 120, and is further used as a sound delivery means (e.g., a speaker decoration) for delivering the sound generated in a speaker (e.g., the speaker 101 of FIG. 1A) to the outside of the electronic apparatus as further explained in Figs. 8 to 11. In some embodiments, the spacing member 200 may be disposed around a microphone, and thus may be used to space the two housings 110 and 120 and may be used as a sound delivery means for delivering an external sound to the microphone also.

FIG. 6 is a partial cross-sectional view of an electronic apparatus 100 seen from the line 6-6 of FIG. 4 according to various embodiments of the disclosure. At least one of elements of an electronic apparatus 100 according to various embodiments may be the same as or similar to at least one of the elements of the electronic apparatus 100 of FIG. 1A to FIG. 5B, and thus overlapping descriptions thereof will be omitted.

In the description of FIG. 6, a connector port (e.g., the connector port 107 of FIG. 1A) will be omitted for the convenience of description.

Referring to FIG. 6, the electronic apparatus 100 is configured to operate such that a first housing 110 substantially faces the second housing 120 in a folding state. For example, the electronic apparatus 100 may be configured such that at least a part (e.g., the first side surface 113a of FIG. 1A) of a first side frame 113 of the first housing 110 substantially faces at least a part (e.g., the fourth side surface 123a of FIG. 1A) of a second side frame 123 of the second housing 120 in a folding state.

According to various embodiments, the electronic apparatus 100 may include a speaker (e.g., the speaker 101 of FIG. 1A) disposed in the first housing 110. According to one embodiment, the speaker (e.g., the speaker 101 of FIG. 1A) may be used as a receiver for calls. According to one embodiment, the electronic apparatus 100 may include a sound resonance space 1011 configured to provide sound pressure for sound generated through a speaker (e.g., the speaker 101 of FIG. 1A) and functionally connected to a sound discharge hole 1012 for delivering sound to the outside of the electronic apparatus 100. For example, the sound resonance space 1011 may be formed in a self-structure (e.g., a self-structure of a first support plate (e.g., the first support plate 1311 of FIG. 3) of the first housing 110 and/or by means of a separate speaker enclosure. In some embodiments, the sound resonance space 1011 may be formed in a type of bypassing an electronic component (e.g., the camera device 105) disposed therearound. According to one embodiment, the electronic apparatus 100 may include a first protective cover 115 disposed on the edge of the first housing 110 while surrounding the edge of the flexible display 130 interposed therein. According to one embodiment, the flexible display 130 may be protected such that the edge of the flexible display 130 is not exposed to the outside by the first protective cover 115. According to one embodiment, the first protective cover 115 may include a sound connection path 1152 disposed at a position corresponding to the sound discharge hole 1012. According to one embodiment, the sound connection path 1152 may be formed in a recess 1151 which is formed on the first protective cover 115 to be lower than the outer surface of the first protective cover 115. According to one embodiment, the first protective cover 115 may include a spacing member 200 disposed in the recess 1151. According to one embodiment, the spacing member 200 includes an opening 201 disposed at a position corresponding to the sound connection path 1152. Accordingly, the sound generated through a speaker (e.g., the speaker 101 of FIG. 1A) is emitted to the outside of the electronic apparatus 100 through the sound resonance space 1011, the sound discharge hole 1012, the sound connection path 1152, and the opening 201. In some embodiments, the electronic apparatus 100 may include a breathable waterproof member (not shown) disposed between the sound resonance space 1011 and the sound discharge hole 1012 so as to prevent foreign materials and/or moisture from entering the inside of the electronic apparatus 100. According to one embodiment, the breathable waterproof member (not shown) may include a Gore-Tex material, a non-woven fabric for waterproofing, or a membrane.

According to one embodiment, the electronic apparatus 100 may include a second protective cover 125 disposed on the edge of the second housing 120 while surrounding the edge of the flexible display 130 interposed therein. According to one embodiment, the flexible display 130 may be protected such that the edge thereof is not exposed to the outside by the second protective cover 125.

According to various embodiments, the electronic apparatus 100 is configured to operate such that the first protective cover 115 substantially faces the second protective cover 125 in a folding state. In this case, the second protective cover 125 is disposed to have a designated first distance of spacing g1 from the first protective cover 115 by the spacing member 200 disposed to protrude from the first protective cover 115. Accordingly, when a first conductive portion 116 disposed on the first side frame 113 of the first housing 110 and/or a second conductive portion 126 disposed on the second side frame 123 of the second housing 120 are used as an antenna, the first conductive portion 116 and the second conductive portion 126 are configured to maintain a state of being spaced apart by the first distance of spacing g1, so that the radiation performance degradation of an antenna is advantageously reduced in a folding state of the electronic apparatus 100.

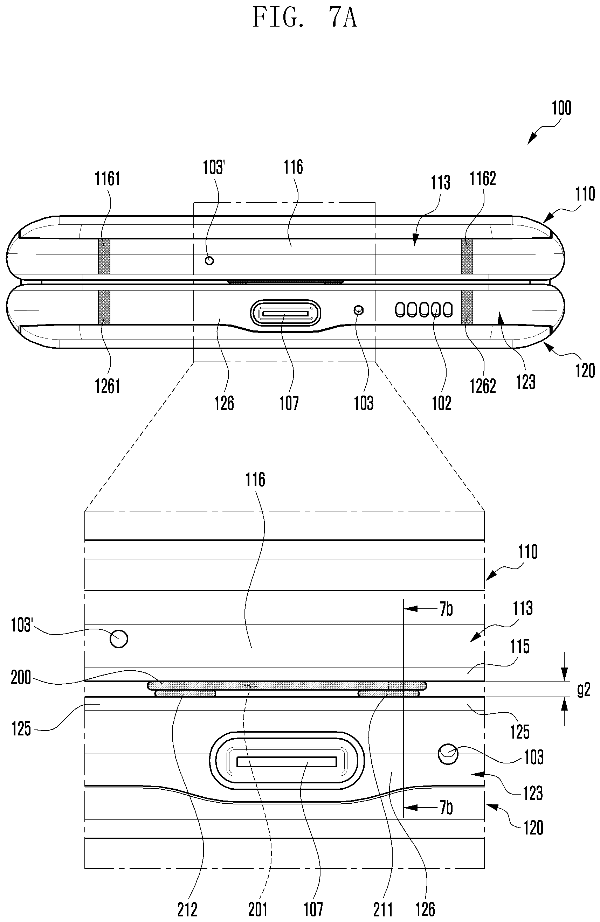

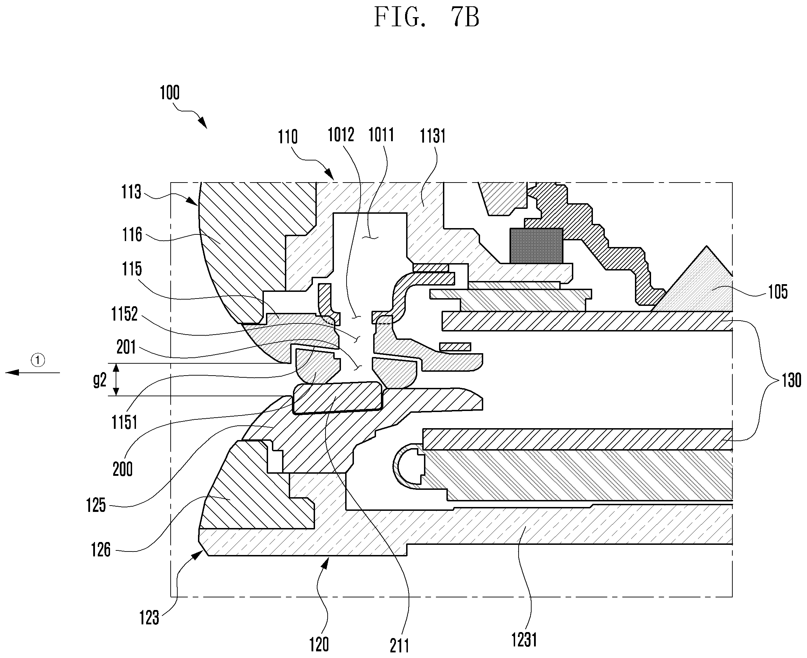

FIG. 7A is a view of an electronic apparatus 100, which shows a state in which two housings 110 and 120 are spaced by means of a spacing member 200 and a damper 211 and 212, in a folding state according to various optional embodiments of the disclosure. FIG. 7B is a partial cross-sectional view of an electronic apparatus 100 seen from the line 7b-7b of FIG. 7A according to various optional embodiments of the disclosure.

In the description of FIG. 7A and FIG. 7B, the same reference numerals are assigned to the elements substantially the same as the elements illustrated in FIG. 4 and FIG. 6, and detailed descriptions thereof may be omitted.

Referring to FIG. 7A and FIG. 7B, an electronic apparatus 100 may optionally include at least one damper 211 and 212 disposed on a second housing 120 so as to substantially face a spacing member 200 in a folding state. According to an optional embodiment, at least one damper 211 and 212 may be disposed on a second protective cover 125 of the second housing 120. According to an optional embodiment, the at least one damper 211 and 212 may include a first damper 211 and a second damper 212 which are configured to substantially face the spacing member 200 and arranged to be spaced apart from each other by a predetermined interval, in a folding state. According to an optional embodiment, the first damper 211 and the second damper 212 may be configured to substantially face the spacing member 200, and may be arranged at positions which do not at least partially overlap an opening 201 of the spacing member 200. Therefore, in a folding state of the electronic apparatus 100, the space between the two dampers 211 and 212 may be used as a sound guide path for emitting the sound generated from a speaker (e.g., the speaker 101 of FIG. 1A) to the outside of the electronic apparatus. In some embodiments, the at least one damper 211 and 212 may be disposed at a position overlapping the opening 201 of the spacing member 200. According to an optional embodiment, the at least one damper 211 and 212 may include an elastic material such as rubber, urethane, or silicone. For example, the electronic apparatus 100 may be configured to distribute an impact generated during a folding operation (e.g., a change to a folding state) by using the spacing member 200 and/or the at least one damper 211 and 212.

According to various embodiments, the electronic apparatus 100 may optionally include the spacing member 200 that may be disposed on the first protective cover 115 and at the least one damper 211 and 212 disposed on the second protective cover 125, which are configured to substantially face each other. For example, the second protective cover 125 may be disposed to have a designated second distance of spacing g2 from the first protective cover 115. For example, the second distance of spacing g2 may be greater than a first distance of spacing (e.g., the first distance of spacing g1 of FIG. 4). Advantageously, when a first conductive portion 116 disposed on a first side frame 113 of the first housing 110 and/or a second conductive portion 126 disposed on a second side frame 123 of the second housing 120 are used as an antenna, the first conductive portion 116 and the second conductive portion 126 may be configured to maintain a state of being spaced apart by the second distance of spacing g2, so that the radiation performance degradation of an antenna is significantly reduced in a folding state of the electronic apparatus 100.

According to various embodiments, the shapes of the spacing member 200 and/or the at least one damper 211 and 212 may not be limited to the illustrated embodiment, and the shapes of the spacing member 200 and/or the dampers 211 and 212 may be changed according to various embodiments. For example, one surface of the spacing member 200 and one surface of the at least one damper 211 and 212 may be formed to substantially face each other, but it may be not limited thereto. In addition, according to an embodiment, when seen from a direction toward a side surface (e.g., a direction opposite to the direction ①), one surface of the at least one damper 211 and 212 may be formed in an oblique shape (not shown).

According to various embodiments, the shape of the at least one damper 211 and 212 may not be limited to the illustrated embodiment, and may be formed in various shapes. For example, the shape of the multiple dampers 211 and 212 may be formed to have a straight line, a circle, a polygon, or the like, or may be formed to have a point shape (e.g., a circular point or a quadrilateral point) in point contact with the spacing member 200.

According to various embodiments, as shown in <Table 1> below, in connection with the total radiated power (TRP) and the total isotropic sensitivity (TIS) of an antenna before and after the at least one damper 211 and 212 is applied thereto, for example, it may be known that gains in the TRP and the TIS: are respectively increased by 1 dB and 3.1 dB in the DCS band (e.g., about 1710 - 1880 MHz); are respectively increased by 5.5 dB and 6.2dB in the LTE band 3 (e.g., about 1.8 GHz band); and are respectively increased by 1.7 dB and 1.4 dB in the LTE band 7 (e.g., about 2.6 GHz band). Advantageously, the radiation performance of an antenna is improved when the distance of spacing between the two housings 110 and 120 increases by means of the spacing member 20 and at least one damper 211 and 212 in a folding state of the electronic apparatus 100.

**[Table 1]**

| | TIS | | | TRP | | |
|---|---|---|---|---|---|---|
| BAND | DCS | LTE3 | LTE7 | DCS | LTE3 | LTE7 |
| Before damper is applied (dB) | - 93.2 | - 78.7 | - 81.2 | 8.4 | 2 | 6.9 |
| After damper is applied (dB) | - 94.2 | - 84.2 | - 82.9 | 11.5 | 8.2 | 8.3 |
| Δ(dB) | 1 | 5.5 | 1.7 | 3.1 | 6.2 | 1.4 |

Hereinafter, in the description of FIG. 8 to FIG. 11, the same reference numerals are assigned to the elements substantially the same as the elements illustrated in FIG. 4 and FIG. 6, and detailed descriptions thereof may be omitted.

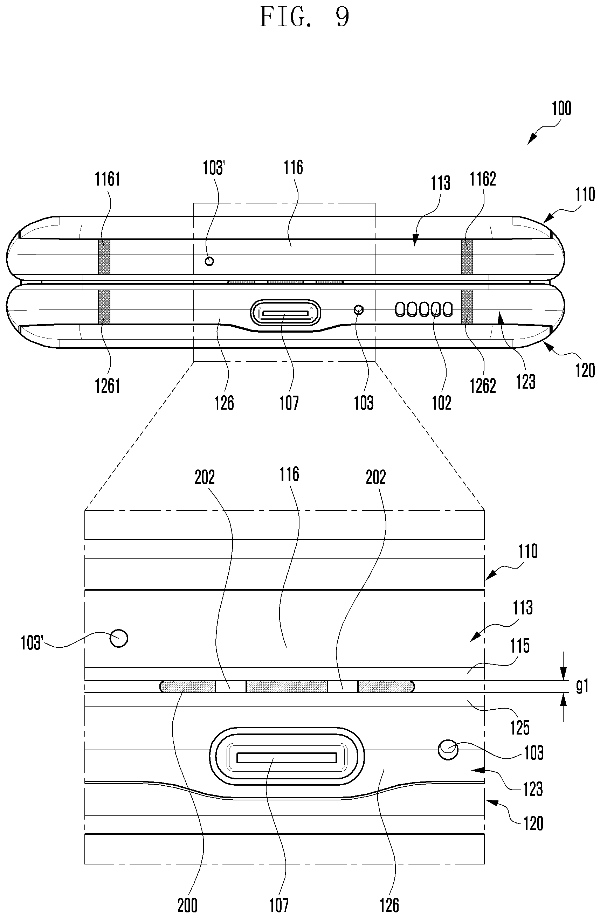

FIG. 8 is a perspective view of a spacing member 200 according to various optional embodiments of the disclosure. FIG. 9 is a view of an electronic apparatus 100, which shows a state in which two housings 110 and 120 are spaced by means of a spacing member 200 including a sound induction slit 202 of FIG. 8, in a folding state according to various optional embodiments of the disclosure.

Referring to FIG. 8, a spacing member 200 may optionally include at least one sound induction slit 202 formed such that the sound emitted through an opening 201 is guided in an external direction (the direction ①) of the electronic apparatus 100. According to one embodiment, the spacing member 200 may include the at least one sound induction slit 202 formed from the opening 201 in the external direction (the direction ①) of the electronic apparatus 100. According to one embodiment, the at least one sound induction slit 202 may be formed when the spacing member 200 is formed (e.g., when ejected).

Referring to FIG. 9, the electronic apparatus 100 may be configured to operate such that a first protective cover 115 substantially faces a second protective cover 125 in a folding state. In this case, the second protective cover 125 may be disposed to have a designated first distance of spacing g1 from the first protective cover 115 by the spacing member 200 disposed to protrude from the first protective cover 115. According to an optional embodiment, when the electronic apparatus 100 is in a folding state, the spacing member 200 between a first housing 110 and a second housing 120 may be disposed such that at least one sound induction slit 202 is exposed to the outside. In this case, the sound emitted through the opening 201 of the spacing member 200 may be guided to be emitted to the outside of the electronic apparatus 100 through the at least one sound induction slit 202, and thus may contribute to performance improvement in sound of the electronic apparatus 100. For example, in a state where the electronic apparatus 100 is in a folding state, the sound induction slit 202 may be configured to deliver the sound emitted through the opening 201 to the outside of the electronic apparatus and thus to a user when the user is calling or listening to music. In some optional embodiments, the electronic apparatus 100 may further include at least one damper (e.g., the damper 211 and 212 of FIG. 7A) disposed on the second protective cover 125 and configured to substantially face the spacing member 200. In this case, the at least one damper (e.g., the damper 211 and 212 of FIG. 7A) may be disposed to substantially face the spacing member 200 at a position avoiding the at least one sound induction slit 202.

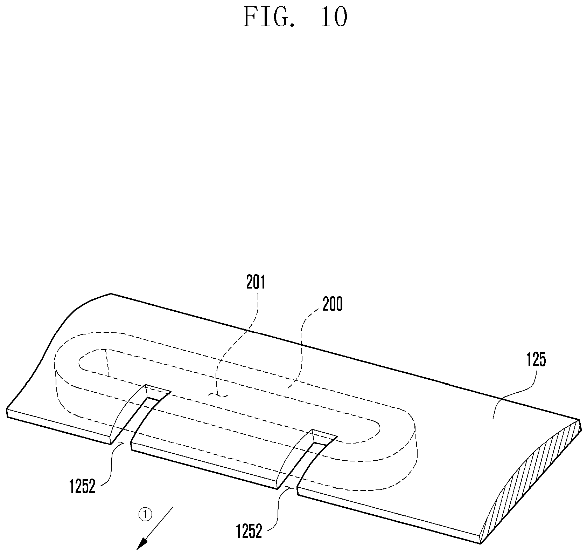

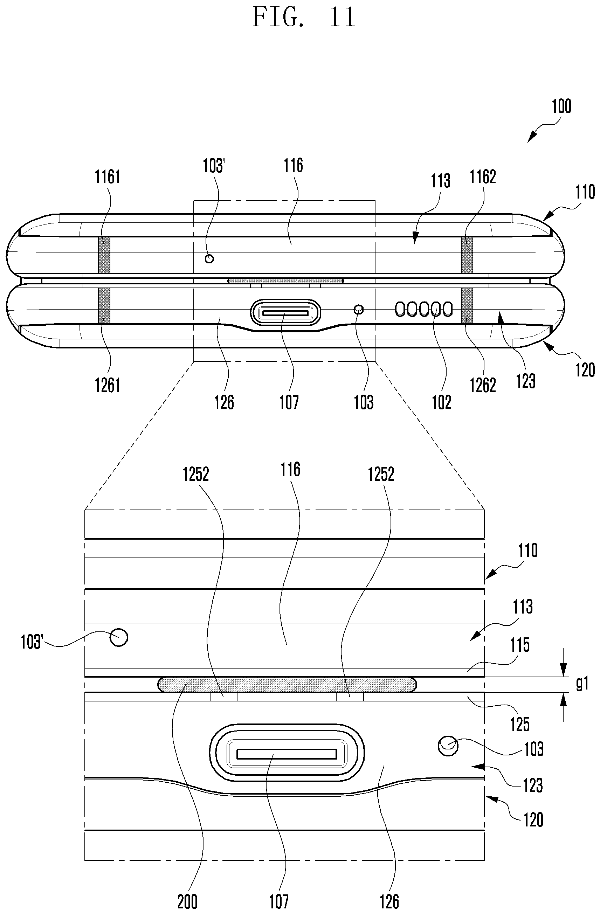

FIG. 10 is a partial perspective view of a second protective cover 125 including a sound induction slit 1252 according to various optional embodiments of the disclosure. FIG. 11 is a view of an electronic apparatus 100, which shows a state in which two housings 110 and 120 are spaced by means of a spacing member 200 and a second protective cover 125 including a sound induction slit 1252, in a folding state according to various optional embodiments of the disclosure.

Referring to FIG. 10, a second protective cover 125 may optionally include at least one sound induction slit 1252 formed such that the sound emitted through an opening 201 of a spacing member 200 is guided in an external direction (the direction ①) of the electronic apparatus 100 in a folding state of the electronic apparatus 100. According to an optional embodiment, the at least one sound induction slit 1252 may be formed to have a designated depth lower than the outer surface of the second protective cover 125. According to an optional embodiment, the at least one sound induction slit 1252 may be disposed at a position in which the sound induction slit at least partially overlaps an opening 201 of the spacing member 200 when the electronic apparatus 100 is in a folding state. According to an optional embodiment, the at least one sound induction slit 1252 may be formed when the second protective cover 125 is formed.

Referring to FIG. 11, the electronic apparatus 100 may be configured to operate such that the first protective cover 115 substantially faces the second protective cover 125 in a folding state. In this case, the second protective cover 125 may be disposed to have a designated first distance of spacing g1 from the first protective cover 115 by the spacing member 200 disposed to protrude from the first protective cover 115. According to an optional embodiment, when the electronic apparatus 100 is in a folding state, the spacing member 200 between the first housing 110 and the second housing 120 may be disposed to substantially face the at least one sound induction slit 1252. In this case, the sound emitted through the opening 201 of the spacing member 200 may be guided to be emitted to the outside of the electronic apparatus 100 through the at least one sound induction slit 1252, and thus may contribute to performance improvement in sound of the electronic apparatus 100. In some optional embodiments, the electronic apparatus 100 may further include at least one damper (e.g., the damper 211 and 212 of FIG. 7A) disposed on the second protective cover 125 and configured to substantially face the spacing member 200. In this case, at least one damper (e.g., the damper 211 and 212 of FIG. 7A) may be disposed to substantially face the spacing member 200 at a position avoiding the at least one sound induction slit 1252.

As another optional embodiment, the electronic apparatus may include a first antenna disposed in an inner space of the first housing 110 and/or a second antenna disposed in an inner space of the second housing. According to an optional embodiment, the first antenna and/or the second antenna may include a laser direct structuring (LDS) pattern formed on a dielectric structure (e.g., an antenna carrier). Even in this case, it may be possible to reduce the radiation performance degradation thereof by spacing the two antennas by means of the spacing member 200 and/or the at least one damper 211 and 212 in a folding state.

According to an aspect of the disclosure, an electronic apparatus (e.g., the electronic apparatus 100 of FIG. 1A) may include a hinge module (e.g., the hinge module 140 of FIG. 3), a first housing (e.g., first housing 110 of FIG. 1A) which is coupled to the hinge module and includes a sound discharge hole (e.g., the sound discharge hole 1012 of FIG. 6) formed to deliver sound output from a sound module (e.g., the sound output device 101 of FIG. 1A or a speaker) disposed in a first space to the outside, a second housing (e.g., the second housing 120 of FIG. 1A) coupled to be foldable with respect to the first housing through the hinge module, a flexible display (e.g., the flexible display 130 of FIG. 1A) disposed to be supported by at least a part of the first housing and the second housing, and a spacing member (e.g., the spacing member 200 of FIG. 6) including at least one opening (e.g., the opening 201 of FIG. 6) disposed in a portion corresponding to the sound discharge hole so as to protrude further than the outer surface of the first housing, wherein in a folding state, the first housing and the second housing may be spaced and arranged to have at least partially a first distance of spacing (e.g., the first distance of spacing g1 of FIG. 6) by means of the spacing member.

According to another aspect of the disclosure, a first protective cover (e.g., the first protective cover 115 of FIG. 6), which is disposed along an edge of the first housing and includes at least one sound connection path (e.g., the sound connection path 1152 of FIG. 6) formed at a position corresponding to the sound discharge hole, may be included therein.

According to another aspect of the disclosure, the spacing member may be disposed on the first protective cover such that the at least one opening corresponds to the at least one sound connection path.

According to another aspect of the disclosure, a second protective cover (e.g., the second protective cover 125 of FIG. 6), which is disposed along an edge of the second housing, may be further included therein.

Further, at least one damper (e.g., the damper 211 and 212 of FIG. 7A), which is disposed on the second protective cover so as to protrude further than the outer surface of the second protective cover, and disposed to be in contact with at least a part of the spacing member in the folding state, may be included therein.

According to another aspect of the disclosure, in the folding state, the first housing and the second housing may be spaced and arranged to have a second distance of spacing (e.g., the second distance of spacing g2 of FIG. 7A) greater than the first distance of spacing by means of the spacing member and the at least one damper.

According to another aspect of the disclosure, the at least one damper may be disposed at a position which does not at least partially overlap the opening in the folding state.

According to another aspect of the disclosure, the at least one damper may include a first damper in contact with the spacing member at one side of the opening, and a second damper in contact with the spacing member at the other side of the opening, in the folding state.

According to another aspect of the disclosure, the second protective cover may include at least one sound induction slit, and the at least one sound induction slit may be formed lower than the outer surface of the second protective cover and may be disposed to at least partially overlap the at least one opening in the folding state.

According to another aspect of the disclosure, the spacing member may be configured to face the second protective cover in the folding state.

According to another aspect of the disclosure, the spacing member may further include at least one sound induction slit (e.g., the sound induction slit 1252 of FIG. 10) formed to deliver the sound delivered from the sound discharge hole to the outside.

According to another aspect of the disclosure, the at least one sound induction slit may be formed lower than the outer surface of the second protective cover, and may be disposed to overlap the at least one opening in the folding state.

According to another aspect of the disclosure, the spacing member may further include at least one sound induction slit (e.g., the sound induction slit 202 of FIG. 8) formed to be connected from the at least one opening to the outside in the folding state.

According to another aspect of the disclosure, the at least one sound induction slit may be configured to be exposed to the outside of the electronic apparatus in the folding state.

According to another aspect of the disclosure, the spacing member may be formed of at least one of rubber, urethane or silicone.

According to another aspect of the disclosure, the first housing, in the unfolding state, may include a first side frame (e.g., first side frame 113 of FIG. 4) which is configured to at least partially surround a first surface facing a first direction, a second surface facing a second direction opposite to the first surface, and the first space between the first surface and the second surface, and includes a first conductive portion (e.g., first conductive portion 116 of FIG. 4), the second housing, in the unfolding state, may include a second side frame (e.g., the second side frame 123 of FIG. 4) which is configured to at least partially surround a third surface facing the first direction, a fourth surface facing the second direction, and a second space between the third surface and the fourth surface and includes a second conductive portion (e.g., second conductive portion 126 of FIG. 4), and a wireless communication circuit, which is electrically connected to the first conductive portion and/or the second conductive portion in the first space and/or the second space, may be included therein, wherein the wireless communication circuit may be configured to transmit and/or receive a wireless signal in at least one designated frequency band through the first conductive portion and/or the second conductive portion.

According to another aspect of the disclosure, the first conductive portion, in the first side frame, may be electrically segmented through a first non-conductive portion (e.g., the first non-conductive portion 1161 of FIG. 4) and a second non-conductive portion (e.g., the second non-conductive portion 1162 of FIG. 4) which are arranged to be spaced apart from each other, and the second conductive portion, in the second side frame, may be electrically segmented through a third non-conductive portion (e.g., the third non-conductive portion 1261 of FIG. 4) and a fourth non-conductive portion (e.g., the fourth non-conductive portion 1262 of FIG. 4) which are arranged to be spaced apart from each other.

According to another aspect of the disclosure, the first conductive portion and the second conductive portion may be arranged at corresponding positions in the folding state.

According to another aspect of the disclosure, the first non-conductive portion may be disposed at a position corresponding to the third non-conductive portion and
the second non-conductive portion may be disposed at a position corresponding to the fourth non-conductive portion, in the folding state.

According to another aspect of the disclosure, a first antenna disposed in a first inner space of the first housing and a second antenna disposed in a second inner space of the second housing may be further included therein, and the first antenna may be disposed at a position corresponding to the second antenna in the folding state.

According to another aspect of the disclosure, and the spacing member may be disposed on at least a part of the first surface and may be configured to substantially face the third surface, in a folding state, wherein in the folding state, the first side frame and the second side frame may be arranged to have the first distance of spacing (e.g., the first distance of spacing of FIG. 4 g1) by means of the spacing member (e.g., the spacing member 200 of FIG. 4).

According to another aspect of the disclosure, the first conductive portion may be disposed at a position corresponding to the second conductive portion, and may be disposed to have the first distance of spacing by means of the spacing member, in the folding state.

According to another aspect of the disclosure, a wireless communication circuit, which is electrically connected to the first conductive portion and/or the second conductive portion, may be included therein, and the wireless communication circuit may be configured to transmit and/or receive a wireless signal in at least one designated frequency band through the first conductive portion and/or the second conductive portion.

According to another aspect of the disclosure, an electronic apparatus (e.g., the electronic apparatus 100 of FIG. 1A) may include a hinge module (e.g., the hinge module 140 of FIG. 3), a first housing (e.g., first housing 110 of FIG. 1A) which is functionally coupled to the hinge module, at least partially includes a first conductive portion (e.g., the first conductive portion 1161 of FIG. 2A), and includes a sound discharge hole (e.g., the sound discharge hole 1152 of FIG. 6) configured to allow a sound module (e.g., the sound module 101 of FIG. 1A) disposed in an inner space of the electronic apparatus (e.g., the electronic apparatus 100 of FIG. 1A) to be connected to the outside, a second housing (e.g., the second housing 120 of FIG. 1A) which is foldably coupled to the first housing through the hinge module and includes a second conductive portion (e.g., the second conductive portion 1261of FIG. 2A), a flexible display (e.g., the flexible display 130 of FIG. 1A) disposed to be supported by at least a part of the second housing through the hinge module from at least a part of the first housing, a wireless communication circuit configured to transmit and/or receive a wireless signal in at least one designated frequency band through the first conductive portion and/or the second conductive portion, and a spacing member (e.g., the spacing member 200 of FIG. 6) including at least one opening (e.g., the opening 201 of FIG. 6) disposed on a portion of the first housing, which corresponds to the sound discharge hole, so as to protrude further than the outer surface of the first housing, wherein in the folding state, the first housing and the second housing may be arranged to have a first distance of spacing (e.g., the first distance of spacing g1 of FIG. 6) by means of the spacing member.

According to another aspect of the disclosure, at least one damper, which is disposed on the second housing so as to protrude further than the outer surface of the second housing and disposed to be in contact with at least a part of the spacing member in the folding state, may be further included therein.

According to another aspect of the disclosure, the first housing and the second housing may be arranged to have a second distance of spacing greater than the first distance of spacing by means of the spacing member and the at least one damper, in the folding state.

Embodiments of the disclosure disclosed in the specification and the drawings are merely specific examples presented to easily describe the technical content according to the embodiments of the disclosure and to help understanding of the embodiments of the disclosure, and are not intended to limit the scope of embodiments of the disclosure.

## Claims

1. An electronic apparatus (100) comprising:
a hinge module (140);
a sound module (101);
a first housing (110) coupled to the hinge module (140), the first housing (110) comprising a sound discharge hole (1012) formed to be connected to an outside of the electronic apparatus (100) and a first side frame (113) comprising a first conductive portion (116);
a second housing (120) coupled to be foldable with respect to the first housing (110) through the hinge module (140), the second housing (120) comprising a second side frame (123) comprising a second conductive portion (126);
a wireless communication circuit, which is electrically connected to the first conductive portion (116) and/or the second conductive portion (126);
a flexible display (130) disposed to be supported by at least a part of the first housing (110) and the second housing (120); and
a spacing member (200) comprising at least one opening (201) disposed in a portion (1151) corresponding to the sound discharge hole (1012), the spacing member (200) being protruded further than the outer surface of the first housing (110),
wherein at least part of a sound output from the sound module (101) is emitted to the outside of the electronic apparatus (100) through the sound discharge hole (1012) and the at least one opening (201), and
wherein in a folding state that the second housing (120) is folded with respect to the first housing (110) through the hinge module (140), the first side frame (113) of the first housing (110) and the second side frame (123) of the second housing (120) are spaced and arranged to at least partially have a first distance of spacing by means of the spacing member (200).

2. The electronic apparatus of claim 1, comprising
a first protective cover (115) which is disposed along an edge of the first housing (110) and comprises at least one sound connection path (1152) formed at a position corresponding to the sound discharge hole (1012).

3. The electronic apparatus of claim 2, wherein
the spacing member (200) is disposed on the first protective cover (115) such that the at least one opening (201) corresponds to the at least one sound connection path (1152).

4. The electronic apparatus of claim 2,
further comprising a second protective cover (125) disposed along an edge of the second housing (120), and
comprising at least one damper (211, 212) disposed on the second protective cover (125) so as to protrude further than the outer surface of the second protective cover (125), and disposed to be in contact with at least a part of the spacing member (200) in the folding state.

5. The electronic apparatus of claim 4, wherein
in the folding state, the first housing (110) and the second housing (120) are spaced and arranged to have a second distance of spacing greater than the first distance of spacing by means of the spacing member (200) and the at least one damper (211, 212).

6. The electronic apparatus of claim 4, wherein
in the folding state, the at least one damper (211, 212) is disposed at a position which does not at least partially overlap the opening (201).

7. The electronic apparatus of claim 4, wherein
in the folding state, the at least one damper (211, 212) comprises a first damper (211) in contact with the spacing member (200) at one side of the opening (201), and a second damper (212) in contact with the spacing member (200) at the other side of the opening (201).

8. The electronic apparatus of claim 4, wherein
the second protective cover (125) comprises at least one sound induction slit (1252), and
the at least one sound induction slit (1252) is formed lower than the outer surface of the second protective cover (125), and
is disposed to at least partially overlap the at least one opening (201) in the folding state.

9. The electronic apparatus of claim 1, wherein
the spacing member (200) further comprises at least one sound induction slit (202) formed to deliver the sound delivered from the sound discharge hole (1012) to the outside.

10. The electronic apparatus of claim 9, wherein
in the folding state, the at least one sound induction slit (202) is configured to be exposed to the outside of the electronic apparatus.

11. The electronic apparatus of claim 1, wherein
in an unfolding state, the first housing (110) comprises a first surface (111) facing a first direction and a second surface (112) facing a first direction opposite to the first surface (111), and the first side frame (113) at least partially surrounding a first space between the first surface (111) and the second surface (112),
in the unfolding state, the second housing (120) comprises a third surface (121) facing the first direction and a fourth surface (122) facing the second direction, and the second side frame (123) at least partially surrounding a second space between the third surface (121) and the fourth surface (122),
in the first space and/or the second space, the wireless communication circuit is electrically connected to the first conductive portion (116) and/or the second conductive portion (126), is included therein, and
the wireless communication circuit is configured to transmit and/or receive a wireless signal in at least one designated frequency band through the first conductive portion (116) and/or the second conductive portion (126).

12. The electronic apparatus of claim 11, wherein
in the first side frame, the first conductive portion (116) is electrically segmented through a first non-conductive portion (1161) and a second non-conductive portion (1162) which are arranged to be spaced apart from each other, and
in the second side frame, the second conductive portion (126) is electrically segmented through a third non-conductive portion (1261) and a fourth non-conductive portion (1262) which are arranged to be spaced apart from each other.

13. The electronic apparatus of claim 12, wherein
in the folding state, the first conductive portion (116) and the second conductive portion (126) are arranged at corresponding positions.

14. The electronic apparatus of claim 12, wherein
in the folding state, the first non-conductive portion (1161) is disposed at a position corresponding to the third non-conductive portion (1261), and the second non-conductive portion (1162) is disposed at a position corresponding to the fourth non-conductive portion (1262).

15. The electronic apparatus of claim 11 to 14, wherein:
the spacing member (200) is disposed on at least a part of the first surface (111) and configured to substantially face the third surface (121) in a folding state.

## Patentansprüche

1. Elektronisches Gerät (100), umfassend:
ein Scharniermodul (140);
ein Schallmodul (101);
ein mit dem Scharniermodul (140) gekoppeltes erstes Gehäuse (110), wobei das erste Gehäuse (110) ein Schallabgabeloch (1012), das dazu ausgebildet ist, mit einer Außenseite des elektronischen Geräts (100) verbunden zu sein, und einen ersten Seitenrahmen (113) mit einem ersten leitfähigen Abschnitt (116) umfasst;
ein zweites Gehäuse (120), das so gekoppelt ist, dass es durch das Scharniermodul (140) in Bezug auf das erste Gehäuse (110) faltbar ist, wobei das zweite Gehäuse (120) einen zweiten Seitenrahmen (123) mit einem zweiten leitfähigen Abschnitt (126) umfasst;
eine Drahtloskommunikationsschaltung, die mit dem ersten leitfähigen Abschnitt (116) und/oder dem zweiten leitfähigen Abschnitt (126) elektrisch verbunden ist;
eine flexible Anzeige (130), die so angeordnet ist, dass sie durch zumindest einen Teil des ersten Gehäuses (110) und des zweiten Gehäuses (120) getragen wird; und
ein Abstandselement (200), das zumindest eine Öffnung (201) umfasst, die in einem dem Schallabgabeloch (1012) entsprechenden Abschnitt (1151) angeordnet ist,
wobei das Abstandselement (200) weiter als die Außenfläche des ersten Gehäuses (110) vorsteht,
wobei zumindest ein Teil eines vom Schallmodul (101) abgegebenen Schalls durch das Schallabgabeloch (1012) und die zumindest eine Öffnung (201) zur Außenseite des elektronischen Geräts (100) hin emittiert wird, und
wobei in einem Faltungszustand, in dem das zweite Gehäuse (120) durch das Scharniermodul (140) in Bezug auf das erste Gehäuse (110) gefaltet ist, der erste Seitenrahmen (113) des ersten Gehäuses (110) und der zweite Seitenrahmen (123) des zweiten Gehäuses (120) beabstandet und so angeordnet sind, dass sie durch das Abstandselement (200) zumindest teilweise einen ersten Entfernungsabstand aufweisen.

2. Elektronisches Gerät nach Anspruch 1, umfassend
eine erste Schutzabdeckung (115), die entlang einer Kante des ersten Gehäuses (110) angeordnet ist und zumindest einen Schallverbindungspfad (1152) umfasst, der an einer dem Schallabgabeloch (1012) entsprechenden Position ausgebildet ist.

3. Elektronisches Gerät nach Anspruch 2, wobei
das Abstandselement (200) so auf der ersten Schutzabdeckung (115) angeordnet ist,
dass die zumindest eine Öffnung (201) dem zumindest einen Schallverbindungspfad (1152) entspricht.

4. Elektronisches Gerät nach Anspruch 2,
ferner umfassend eine zweite Schutzabdeckung (125), die entlang einer Kante des zweiten Gehäuses (120) angeordnet ist, und
umfassend zumindest einen Dämpfer (211, 212), der so auf der zweiten Schutzabdeckung (125) angeordnet ist, dass er weiter als die Außenfläche der zweiten Schutzabdeckung (125) vorsteht, und so angeordnet ist, dass er im Faltungszustand mit zumindest einem Teil des Abstandselements (200) in Kontakt steht.

5. Elektronisches Gerät nach Anspruch 4, wobei
im Faltungszustand das erste Gehäuse (110) und das zweite Gehäuse (120) beabstandet und so angeordnet sind, dass sie durch das Abstandselement (200) und
den zumindest einen Dämpfer (211, 212) einen zweiten Entfernungsabstand aufweisen, der größer als der erste Entfernungsabstand ist.

6. Elektronisches Gerät nach Anspruch 4, wobei
im Faltungszustand der zumindest eine Dämpfer (211, 212) in einer Position angeordnet ist, die die Öffnung (201) zumindest teilweise nicht überlappt.

7. Elektronisches Gerät nach Anspruch 4, wobei
im Faltungszustand der zumindest eine Dämpfer (211, 212) einen ersten Dämpfer (211), der auf einer Seite der Öffnung (201) mit dem Abstandselement (200) in Kontakt steht, und einen zweiten Dämpfer (212), der auf der anderen Seite der Öffnung (201) mit dem Abstandselement (200) in Kontakt steht, umfasst.

8. Elektronisches Gerät nach Anspruch 4, wobei
die zweite Schutzabdeckung (125) zumindest einen Schalleinleitungsschlitz (1252) umfasst und
der zumindest eine Schalleinleitungsschlitz (1252) tiefer als die Außenfläche der zweiten Schutzabdeckung (125) ausgebildet und so angeordnet ist, dass er im Faltungszustand die zumindest eine Öffnung (201) zumindest teilweise überlappt.

9. Elektronisches Gerät nach Anspruch 1, wobei
das Abstandselement (200) ferner zumindest einen Schalleinleitungsschlitz (202) umfasst, der so ausgebildet ist, dass er den aus dem Schallabgabeloch (1012) abgegebenen Schall nach außen abgibt.

10. Elektronisches Gerät nach Anspruch 9, wobei
im Faltungszustand der zumindest eine Schalleinleitungsschlitz (202) dazu ausgelegt ist, zur Außenseite des elektronischen Geräts hin freizuliegen.

11. Elektronisches Gerät nach Anspruch 1, wobei
in einem Entfaltungszustand das erste Gehäuse (110) eine einer ersten Richtung zugewandte erste Oberfläche (111) und eine einer ersten Richtung gegenüber der ersten Oberfläche (111) zugewandte zweite Oberfläche (112) umfasst und der erste Seitenrahmen (113) einen ersten Raum zwischen der ersten Oberfläche (111) und der zweiten Oberfläche (112) zumindest teilweise umgibt,
im Entfaltungszustand das zweite Gehäuse (120) eine der ersten Richtung zugewandte dritte Oberfläche (121) und eine der zweiten Richtung zugewandte vierte Oberfläche (122) umfasst und der zweite Seitenrahmen (123) einen zweiten Raum zwischen der dritten Oberfläche (121) und der vierten Oberfläche (122) zumindest teilweise umgibt,
im ersten Raum und/oder zweiten Raum die Drahtloskommunikationsschaltung mit dem ersten leitfähigen Abschnitt (116) und/oder dem zweiten leitfähigen Abschnitt (126) elektrisch verbunden ist, darin enthalten ist, und
die Drahtloskommunikationsschaltung dazu ausgelegt ist, durch den ersten leitfähigen Abschnitt (116) und/oder den zweiten leitfähigen Abschnitt (126) ein drahtloses Signal in zumindest einem bestimmten Frequenzband zu senden und/oder zu empfangen.

12. Elektronisches Gerät nach Anspruch 11, wobei
im ersten Seitenrahmen der erste leitfähige Abschnitt (116) durch einen ersten nichtleitfähigen Abschnitt (1161) und einen zweiten nichtleitfähigen Abschnitt (1162), die so angeordnet sind, dass sie voneinander beabstandet sind, elektrisch segmentiert ist und
im zweiten Seitenrahmen der zweite leitfähige Abschnitt (126) durch einen dritten nichtleitfähigen Abschnitt (1261) und einen vierten nichtleitfähigen Abschnitt (1262), die so angeordnet sind, dass sie voneinander beabstandet sind, elektrisch segmentiert ist.

13. Elektronisches Gerät nach Anspruch 12, wobei
im Faltungszustand der erste leitfähige Abschnitt (116) und der zweite leitfähige Abschnitt (126) an entsprechenden Positionen angeordnet sind.

14. Elektronisches Gerät nach Anspruch 12, wobei
im Faltungszustand der erste nichtleitfähige Abschnitt (1161) an einer dem dritten nichtleitfähigen Abschnitt (1261) entsprechenden Position angeordnet ist und der zweite nichtleitfähige Abschnitt (1162) an einer dem vierten nichtleitfähigen Abschnitt (1262) entsprechenden Position angeordnet ist.

15. Elektronisches Gerät nach Anspruch 11 bis 14, wobei:
das Abstandselement (200) auf zumindest einem Teil der der ersten Oberfläche (111) angeordnet und dazu ausgelegt ist, in einem Faltungszustand im Wesentlichen der dritten Oberfläche (121) zugewandt zu sein.

## Revendications

1. Appareil électronique (100) comprenant :
un module de charnière (140) ;
un module de son (101) ;
un premier boîtier (110) couplé au module de charnière (140), le premier boîtier (110) comprenant un trou de décharge de son (1012) formé pour être connecté à un extérieur de l'appareil électronique (100) et un premier cadre latéral (113) comprenant une première portion conductrice (116) ;
un second boîtier (120) couplé pour pouvoir être plié par rapport au premier boîtier (110) par l'intermédiaire du module de charnière (140), le second boîtier (120) comprenant un second cadre latéral (123) comprenant une seconde portion conductrice (126) ;
un circuit de communication sans fil qui est connecté électriquement à la première portion conductrice (116) et/ou la seconde portion conductrice (126) ;
un affichage souple (130) disposé pour être supporté par au moins une partie du premier boîtier (110) et du second boîtier (120) ; et
un élément d'espacement (200) comprenant au moins une ouverture (201) disposée dans une portion (1151) correspondant au trou de décharge de son (1012), l'élément d'espacement (200) faisant saillie au-delà de la surface extérieure du premier boîtier (110),
dans lequel au moins une partie d'une sortie de son à partir du module de son (101) est émise vers l'extérieur de l'appareil électronique (100) par l'intermédiaire du trou de décharge de son (1012) et de l'au moins une ouverture (201), et
dans lequel dans un état plié où le second boîtier (120) est plié par rapport au premier boîtier (110) par l'intermédiaire du module de charnière (140), le premier cadre latéral (113) du premier boîtier (110) et le second cadre latéral (123) du second boîtier (120) sont espacés et agencés pour avoir au moins partiellement une première distance d'espacement à l'aide de l'élément d'espacement (200).

2. Appareil électronique selon la revendication 1, comprenant
un premier couvercle de protection (115) qui est disposé le long d'un bord du premier boîtier (110) et comprend au moins un chemin de connexion sonore (1152) formé au niveau d'une position correspondant au trou de décharge de son (1012).

3. Appareil électronique selon la revendication 2, dans lequel
l'élément d'espacement (200) est disposé sur le premier couvercle de protection (115) de telle sorte que l'au moins une ouverture (201) corresponde à l'au moins un chemin de connexion sonore (1152).

4. Appareil électronique selon la revendication 2,
comprenant en outre un second couvercle de protection (125) disposé le long d'un bord du second boîtier (120), et
comprenant au moins un élément d'amortissement (211, 212) disposé sur le second couvercle de protection (125) de manière à faire saillie au-delà de la surface extérieure du second couvercle de protection (125), et disposé pour être en contact avec au moins une partie de l'élément d'espacement (200) dans l'état plié.

5. Appareil électronique selon la revendication 4, dans lequel
dans l'état plié, le premier boîtier (110) et le second boîtier (120) sont espacés et agencés pour avoir une seconde distance d'espacement supérieure à la première distance d'espacement à l'aide de l'élément d'espacement (200) et l'au moins un élément d'amortissement (211, 212).

6. Appareil électronique selon la revendication 4, dans lequel
dans l'état plié, l'au moins un élément d'amortissement (211, 212) est disposé au niveau d'une position qui ne chevauche pas au moins partiellement l'ouverture (201).

7. Appareil électronique selon la revendication 4, dans lequel
dans l'état plié, l'au moins un élément d'amortissement (211, 212) comprend un premier élément d'amortissement (211) en contact avec l'élément d'espacement (200) au niveau d'un côté de l'ouverture (201), et un second élément d'amortissement (212) en contact avec l'élément d'espacement (200) de l'autre côté de l'ouverture (201).

8. Appareil électronique selon la revendication 4, dans lequel
le second couvercle de protection (125) comprend au moins une fente d'induction sonore (1252), et
l'au moins une fente d'induction sonore (1252) est formée de manière inférieure à la surface extérieure du second couvercle de protection (125), et
est disposée pour chevaucher au moins partiellement l'au moins une ouverture (201) dans l'état plié.

9. Appareil électronique selon la revendication 1, dans lequel
l'élément d'espacement (200) comprend en outre au moins une fente d'induction sonore (202) formée pour fournir le son fourni à partir du trou de décharge de son (1012) vers l'extérieur.

10. Appareil électronique selon la revendication 9, dans lequel
dans l'état plié, l'au moins une fente d'induction sonore (202) est configurée pour être exposée vers l'extérieur de l'appareil électronique.

11. Appareil électronique selon la revendication 1, dans lequel
dans un état déplié, le premier boîtier (110) comprend une première surface (111) en regard d'une première direction et une deuxième surface (112) en regard d'une première direction opposée à la première surface (111), et le premier cadre latéral (113) entourant au moins partiellement un premier espace entre la première surface (111) et la deuxième surface (112),
dans l'état déplié, le second boîtier (120) comprend une troisième surface (121) en regard de la première direction et une quatrième surface (122) en regard de la seconde direction, et le second cadre latéral (123) entourant au moins partiellement au moins un second espace entre la troisième surface (121) et la quatrième surface (122),
dans le premier espace et/ou le second espace, le circuit de communication sans fil est connecté électriquement à la première portion conductrice (116) et/ou la seconde portion conductrice (126), est inclus à l'intérieur, et
le circuit de communication sans fil est configuré pour émettre et/ou recevoir un signal sans fil dans au moins une bande de fréquences désignée par l'intermédiaire de la première portion conductrice (116) et/ou la seconde portion conductrice (126).

12. Appareil électronique selon la revendication 11, dans lequel
dans le premier cadre latéral, la première portion conductrice (116) est segmentée électriquement par l'intermédiaire d'une première portion non-conductrice (1161) et d'une seconde portion non-conductrice (1162) qui sont agencées pour être espacées l'une de l'autre, et
dans le second cadre latéral, la seconde portion conductrice (126) est segmentée électriquement par l'intermédiaire d'une troisième portion non-conductrice (1261) et d'une quatrième portion non-conductrice (1262) qui sont agencées pour être espacées l'une de l'autre.

13. Appareil électronique selon la revendication 12, dans lequel
dans l'état plié, la première portion conductrice (116) et la seconde portion conductrice (126) sont agencées au niveau de positions correspondantes.

14. Appareil électronique selon la revendication 12, dans lequel
dans l'état plié, la première portion non-conductrice (1161) est disposée au niveau d'une position correspondant à la troisième portion non-conductrice (1261), et la seconde portion non-conductrice (1162) est disposée au niveau d'une position correspondant à la quatrième portion non-conductrice (1262).

15. Appareil électronique selon la revendication 11 à 14, dans lequel :
l'élément d'espacement (200) est disposé sur au moins une partie de la première surface (111) et configuré pour être sensiblement en regard de la troisième surface (121) dans un état plié.
